# EUROPÄISCHE PATENTSCHRIFT

(11) **EP 4 234 327 B1**
(45) Veröffentlichungstag und Bekanntmachung des Hinweises auf die Patenterteilung: **31.07.2024**
(21) Anmeldenummer: 23177673.3
(22) Anmeldetag: 07.06.2022
(51) Int. Cl.: B60N 2/015, B60N 2/30, B60N 2/36, B60N 2/68

(54) **BEFESTIGUNGSVORRICHTUNG FÜR EINE RÜCKENLEHNE EINES FAHRZEUGSITZES MIT WENIGSTENS ZWEI UNABHÄNGIG VONEINANDER VERSCHWENKBAREN LEHNENELEMENTEN, SOWIE VERFAHREN ZUR MONTAGE EINES LEHNENELEMENTS MITTELS EINER BEFESTIGUNGSVORRICHTUNG**
FASTENING DEVICE FOR A BACKREST OF A VEHICLE SEAT WITH AT LEAST TWO INDEPENDENTLY PIVOTABLE BACKREST ELEMENTS AND METHOD FOR MOUNTING A BACKREST ELEMENT BY MEANS OF A FASTENING DEVICE
DISPOSITIF DE FIXATION POUR UN DOSSIER D'UN SIÈGE DE VÉHICULE POURVU D'AU MOINS DEUX ÉLÉMENTS DOSSIERS PIVOTANTS INDÉPENDAMMENT, AINSI QUE PROCÉDÉ DE MONTAGE D'UN ÉLÉMENT DOSSIER AU MOYEN D'UN DISPOSITIF DE FIXATION

(30) Priorität: 08.06.2021 DE 102021205770
(43) Veröffentlichungstag der Anmeldung: 30.08.2023
(62) Teilanmeldung aus: 22177555.4
(73) Patentinhaber: Magna Seating (Germany) GmbH, 63877 Sailauf (DE)
(72) Erfinder: WACHTEL, Andreas, 97816 Lohr (DE); STAAB, André, 63825 Sommerkahl (DE); Wilsberg, Markus, 63906 Erlenbach (DE)
(74) Vertreter: Rausch, Gabriele

(56) Entgegenhaltungen:
- DE-A1- 102008 036 286
- DE-A1- 102019 009 183
- DE-B3- 102014 103 801
- FR-A1- 2 663 889
- US-A1- 2018 043 799

## Beschreibung

Die Erfindung betrifft eine Befestigungsvorrichtung für eine Rückenlehne eines Fahrzeugsitzes mit wenigstens zwei unabhängig voneinander verschwenkbaren Lehnenelementen, sowie ein Verfahren zur Montage einer Anzahl Lehnenelemente mittels einer Befestigungsvorrichtung.

### Stand der Technik

Es ist bekannt, eine Sitzanordnung eines Kraftfahrzeugs der zweiten Sitzreihe, mit einer geteilten Rückenlehne mit unabhängig voneinander schwenkbaren Lehnenelementen auszustatten. Hierdurch ist es möglich die Lehnenelemente ausgehend von einer Gebrauchsposition des Sitzteils zur Schaffung einer Ladefläche auf das Sitzteil in eine Ladeposition zu verschwenken.

Die Sitzanordnung der zweiten oder weiteren Sitzreihe umfasst dabei beispielsweise zwei symmetrische Sitzteile mit einer Sitzfläche und einer Rückenlehne mit Lehnenelementen in einer sogenannten 50:50 Teilung oder eine asymmetrische Teilung im Verhältnis 40:20:40.

Sowohl bei der Varianten der symmetrischen als auch der asymmetrischen Teilung sind die Lehnenelemente unabhängig voneinander ausgehend von der Gebrauchsposition in die Ladestellung verschwenkbar.

In der Gebrauchsposition ist die Rückenlehne beidseits in Querrichtung des Kraftfahrzeugs gesehen an einem oberen Endbereich an der Karosserie über eine Lehnenverrastung/Schlossanbindung gehalten.

Die Lehnenelemente der Rückenlehne sind nach dem Entriegeln dieser Schlossanbindung um eine am unteren Endbereich der Lehnenelemente verlaufende Schwenkachse verschwenkbar relativ zur Fahrzeugkarosserie nach vorne in Richtung auf das Sitzteil klappbar. Hierfür sind die Lehnenelemente der Rückenlehne über Lagerachsen an karosserieseitig ausgeführten Gegenlagerstellen gelagert und dort crashsicher gehalten. Bei einer zweigeteilten Rückenlehne sind dementsprechend mindestens drei karosserieseitige Gegenlagestellen vorzusehen.

Bei den bekannten Sitzanordnungen werden die Lagerachsen der Lehnenelemente der Rückenlehne über Steck- sowie Clipsverbindungen in Kombination mit Schraubverbindungen zur Sicherung und Ausrichtung an den karosserieseitigen Gegenlagerstellen montiert. Eine derartige Montage ist zeitaufwändig und erfordert eine hohe Bauteilkomplexität.

Die DE 10 2019 009 183 A1 offenbart eine Sitzanordnung mit einer Rückenlehne die einen Drehzapfen aufweist, der drehbar um eine Achse in einer Montagehalterung gelagert ist. Die Montagehalterung hat eine Basis, die zur Montage an einem Fahrzeug geeignet ist und umfasst ein Loch, das eine Buchse aufnehmen kann. In der Buchse kann der Drehzapfen gelagert werden. Die Öffnung der Buchse hat eine elliptische Form. An einem Ende des Drehzapfens befinden sich ein Schaft und ein vergrößerter Kopf, der sich weiter von der Achse weg erstreckt als der Schaft.

Die DE 10 2014 103 801 B3 beschreibt eine Rückenlehne die zwei schwenkbare Rückenlehnenteile aufweist, die jeweils mit einem äußeren Lagerbolzen und einem inneren Lagerbolzen versehen sind. Der innere Lagerbolzen ist in einem karosserieseitigen Lager gelagert und der äußere Lagerbolzen greift in eine Lagerausnehmung der Karosseriewandung ein. Bei der Montage wird der Schraubenkopf des äußeren Lagerbolzens in den oberhalb der Ausnehmung angeordneten Schlitzbereich eingesetzt. Die zylindrischen Abschnitte des äußeren Lagerbolzens sind mit Durchmessern versehen, die mit den entsprechenden Durchmessern der Lageraussparung bzw. des zentralen Schlitzes übereinstimmen.

Aus der DE 10 2008 036 286 B4 ist eine Vorrichtung für eine schwenkbare Lagerung von nebeneinander angeordneten Rückenlehnen bekannt. Die Vorrichtung besteht aus einer hinteren Rückenlehne, die eine Drehachse aufweist, die in zueinander justierten Lagerschalen gehalten wird. Jede Lagerschale weist an den freien Enden Stützköpfe auf. Die Stützköpfe sind in einem Lagerbock durch eine Lagerstütze in einer Montageendstellung festgehalten.

Die US 2018/043799 A1 offenbart ein schwenkbares Sitzlehnenteil zur Verwendung in Kraftfahrzeugen, mit einer Bodenbefestigung mit Wand, die mit einem schlüssellochförmigen Schlitz ausgeführt ist, und mit einem Sitzträgerteil, das einen Bolzen, eine Buchse und eine Feder aufweist.

Das Dokument FR 2 663 889 A1 beschreibt eine Schwenkvorrichtung für eine abnehmbare Rückenlehne für einen Fahrzeugrücksitz. Die abnehmbare rechte Rückenlehne hat zwei Zapfen mit abgeflachten Teilen, die in Schlitze von karosseriefesten Halterungen passen. Die Rückenlehne wird flach in die Halterungen hineingeschoben, und die Achsen werden in die Schlitze der Halterungen eingesteckt. Geschlitzte Buchsen sind in die Halterungen eingepasst und haben Drehringe mit ähnlichen Schlitzen wie die Buchsen, so dass die Rückenlehne in den Halterungen verriegelt ist, bis sie wieder demontiert werden soll.

Es ist eine Aufgabe der Erfindung eine Befestigungsvorrichtung für eine Rückenlehne einer Sitzanordnung eines Kraftfahrzeugs mit zwei unabhängig voneinander verschwenkbaren Lehnenelementen bereitzustellen, die eine einfache und werkzeuglose Montage im Kraftfahrzeug erlaubt, wobei die Befestigungsvorrichtung eine schwenkbare Anbindung der Lehnenelemente an die Karosserie und die Anforderungen an die Crashsicherheit erfüllt.

Diese Aufgabe nach einem ersten Aspekt wird durch die im Patentanspruch 1 angegebenen Merkmale gelöst.

Die Befestigungsanordnung gemäß Anspruch 1 ermöglicht eine werkzeuglose, schnelle Montage und Lagerung der Lehnenelemente der Rückenlehne der Sitzanordnung einer zweiten Sitzreihe eines Kraftfahrzeugs.

Nach einem weiteren Aspekt ist es eine Aufgabe der Erfindung ein Verfahren zur Montage von zwei Lehnenelementen mittels einer Befestigungsvorrichtung für eine Rückenlehne einer Sitzanordnung eines Kraftfahrzeugs bereitzustellen, wobei das Verfahren eine einfache und werkzeuglose Montage im Kraftfahrzeug ermöglichen soll.

Durch das erfindungsgemäße Verfahren gemäß dem weiteren Aspekt der Erfindung ist es möglich die Sitzanordnung mittels einer reinen Stecklösung zwischen den Lehnenelementen, den zugeordneten Lagerachsen und den karosserieseitig angeordneten Gegenlagerstellen herzustellen. Die Erfindung realisiert eine crashsichere Montage ohne zusätzliche Schraubprozesse. Dadurch wird die Montagezeit reduziert. Zudem sind keine zusätzlichen Befestigungselemente mehr notwendig.

Eine derartige Sitzanordnung ist üblicherweise in Fahrtrichtung gesehen hinter dem Fahrer und Beifahrersitz als sogenannte zweite Sitzreihe verbaut und umfasst zu dem Fahrer und Beifahrersitz weitere zwei oder drei Sitzplätze.

Die x, y, z- Richtung entspricht den Richtungen eines üblichen Fahrzeugkoordinatensystems, bei dem x die Fahrzeuglängsrichtung, y die Querrichtung und z die Hochrichtung bezeichnet.

Axial bedeutet in Richtung einer Achse verlaufend ausgerichtet, radial verlaufend ist senkrecht dazu in Richtung des Radius ausgerichtet.

### Beschreibung der Erfindung

Die Erfindung wird nachfolgend beispielhaft unter Bezugnahme auf die beigefügten Zeichnungen beschrieben.

Es zeigen:
- Fig. 1: eine perspektivische Darstellung einer äußeren Lagerstelle in einer montierten Situation gemäß einer ersten Ausführungsform,
- Fig. 2: eine perspektivische Darstellung einer mittleren Lagerstelle in einer montierten Situation gemäß der ersten Ausführungsform,
- Fig. 3: einen unteren Ausschnitt eines Lehnenelements einer Rückenlehne mit dem erfindungsgemäßen Befestigungssystem gemäß der ersten Ausführungsform, das eine äußere und eine mittlere Lagerstelle umfasst,
- Fig. 4: eine perspektivische Detailansicht des ersten Montageschrittes des Lehnenelements im Bereich der äußeren Lagerstelle gemäß der ersten Ausführungsform,
- Fig. 5: eine perspektivische Detailansicht des ersten Montageschrittes des Lehnenelements im Bereich der mittleren Lagerstelle gemäß der ersten Ausführungsform,
- Fig. 6: eine perspektivische Darstellung eines zweiten Montageschritts des Lehnenelements im Bereich der mittleren Lagerstelle gemäß der ersten Ausführungsform; und
- Fig. 7: eine perspektivische Darstellung eines letzten Montageschritts des Lehnenelements im Bereich der äußeren Lagerstelle gemäß der ersten Ausführungsform.

Ein nicht dargestelltes Kraftfahrzeug umfasst üblicherweise sogenannte erste Sitzreihe mit einem Fahrersitz und einem Beifahrersitz, sowie eine zweite Sitzreihe mit einer Sitzanordnung für zwei oder drei weitere Sitzplätze. Hierfür weist die Sitzanordnung eine einteilige Sitzfläche auf. Die Rückenlehne der Sitzanordnung der zweiten Sitzreihe hingegen ist mit einer geteilten Rückenlehne mit unabhängig voneinander in Richtung auf die Sitzfläche bzw. gegenüber der Karosserie des Kraftfahrzeugs schwenkbaren Lehnenelementen 1 ausgeführt. Die Schwenkbewegung ist reversibel ausführbar. Hierdurch ist es möglich die Lehnenelemente 1 ausgehend von einer Gebrauchsposition des zugeordneten Sitzteils zur Schaffung einer Ladefläche auf das zugeordnete Sitzteil in Fahrtrichtung nach vorne um eine Schwenkachse 4 zu verschwenken. Die Lehnenelemente 1 weisen einen oberen Endbereich und einen unteren Endbereich 2 auf.

Die Sitzanordnung der zweiten oder weiteren Sitzreihe umfasst dabei beispielsweise zwei symmetrische Sitzteile mit jeweils einer Sitzfläche und Rückenlehnen bildenden Lehnenelemente 1 in einer sogenannten 50:50 Teilung oder eine asymmetrische Teilung im Verhältnis 40/60. Diese Aufteilung und Ausführung der Sitzanordnung mit Sitzflächen und Lehnenelementen 1 ist an dieser Stelle nur beispielhaft.

In der Gebrauchsposition ist die Rückenlehne beidseits in Querrichtung des Kraftfahrzeugs gesehen an dem oberen Endbereich seitlich an der Karosserie über eine Lehnenverrastung/Schlossanbindung gehalten, so dass die Lehnenelemente 1 an einer Klappbewegung nach vorne gehindert werden. Die Lehnenelemente 1 sind in dieser Gebrauchsposition im Wesentlichen in der Hochrichtung ausgerichtet und dienen der Abstützung des Rückens des Benutzers auf den Sitzplätzen der Sitzanordnung in der zweiten Sitzreihe.

Die Lehnenelemente 1 der Rückenlehne sind nach dem Entriegeln dieser Schlossanbindung ausgehend von der Gebrauchsposition um die am unteren Endbereich 2 der Lehnenelemente 1 verlaufende Schwenkachse 4 relativ zur Fahrzeugkarosserie in Fahrtrichtung nach vorne in eine Ladeposition verschwenkbar.

Bei einer Sitzanordnung mit zweigeteilter Rückenlehne in einer 50:50 oder 40/60 Teilung mit zwei Lehnenelementen 1 sind dementsprechend pro Lehnenelement 1 eine äußere Lagerstelle und eine mittlere Lagerstelle randseitig am unteren Endbereich 2 zwischen dem Lehnenelement 1 und der Fahrzeugkarosserie ausgebildet. Die mittlere Lagerstelle ist dabei beiden Lehnenelementen 1 zugeordnet und befindet sich mittig zwischen den beiden Lehenelementen 1 an ihren einander zugewandten mittleren seitlichen Randbereichen. Die äußeren Lagerstellen sind dementsprechend auf den einander abgewandten seitlichen äußeren Randbereichen ausgebildet. Diese seitlichen äußeren Randbereiche sind benachbart zu der Fahrzeugkarosserie im Seitenbereich des Kraftfahrzeugs angeordnet. Die Seitenbereiche der Fahrzeugkarosserie sind nicht dargestellt.

Auf eine Beschreibung des grundsätzlichen Aufbaus der Lehnenelemente 1 wird verzichtet, da diese dem Fachmann bekannt ist. Die Lehnenelemente 1 umfassen grundsätzlich eine Lehnenstruktur mit einem Lehnenrahmen und einem den Lehnenrahmen umgebenden Lehnenpolster.

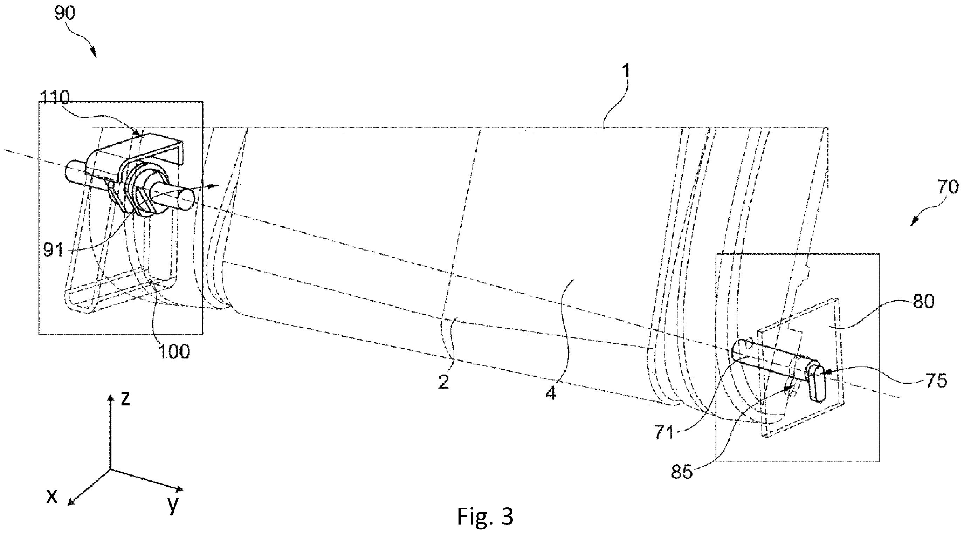

Die Figur 3 zeigt in einem Ausschnitt den unteren Endbereich 2 eines Lehnenelements 1 mit einer äußeren und einer mittleren Lagerstelle 70 bzw. 90 in einer ersten Ausführungsform.

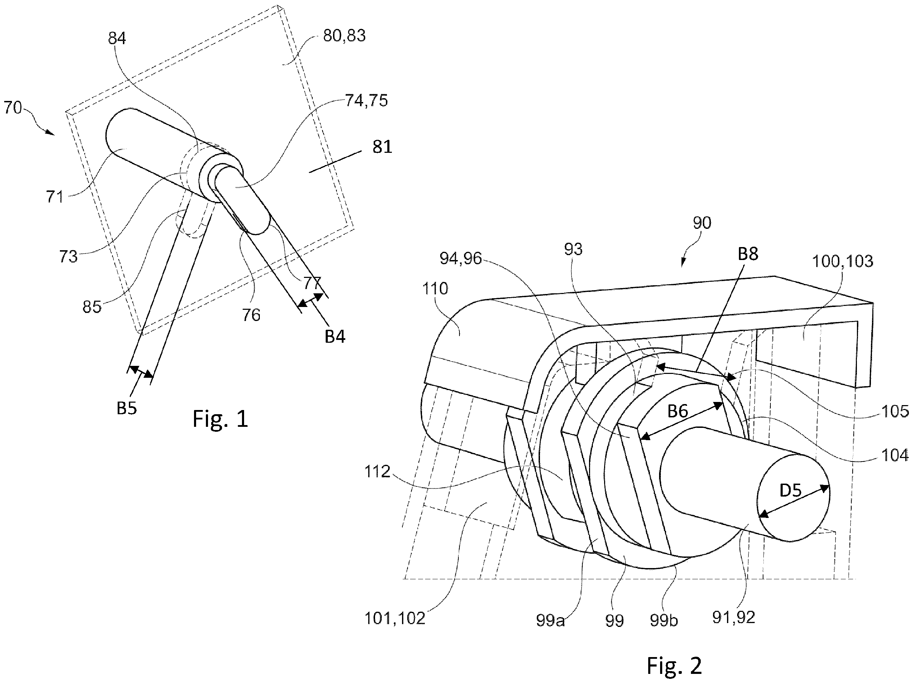

Figur 1 zeigt die äußere Lagerstelle 70 in der montierten Situation in einer Detailansicht. Die Figur 2 zeigt die mittlere Lagestelle 90 in der montierten Situation in einer Detailansicht. (Endmontage-Position)

Die äußere Lagerstelle 70 umfasst dabei eine an dem äußeren Randbereich 2b des Lehnenelements 1 bzw. des Lehnenrahmens festgelegte Lagerachse 71. Die Lagerachse 71 ist in Richtung ihrer Längserstreckung/Querrichtung in der montierten Situation verschwenkbar um die Schwenkachse 4 in einem karosseriefest angebundenen Gegenlagerelement 80 gehalten ist.

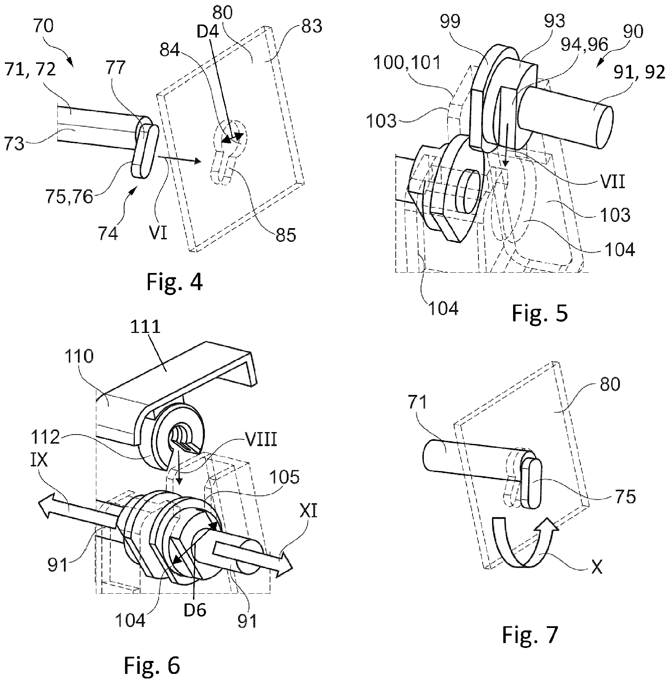

Figur 4 zeigt dabei die äußere Lagerstelle 70 in einer noch unmontierten Situation mit den Einzelteilen Lagerachse 71 und Gegenlagerelement 80. Der Pfeil VI zeigt die Montagerichtung des ersten Montageschritts an.

Die Lagerachse 71 umfasst zwei Abschnitte, denen verschiedene Funktionen zugeordnet sind. Ein zylindrischer Abschnitt 72 mit einem Durchmesser D4, der den eigentlichen Lagerabschnitt 73 bildet. Hieran in axialer Richtung benachbart als Endabschnitt weist die Lagerachse 71 einen Vormontage-Lagerabschnitt 74 auf, der als exzentrisch angeformter Verriegelungsabschnitt 75 ausgebildet ist. Der Vormontage-Lagerabschnitt 74 ist im Querschnitt rechteckig ausgebildet und erstreckt sich als länglicher Riegel radial einseitig von dem zylindrischen Abschnitt 72 und umfasst einen rechteckigen Führungsabschnitt 76 mit parallel zueinander ausgerichteten Seitenflächen 77 und einer Breite B4.

Das zugehörige Gegenlagerelement 80 ist mit der nicht dargestellten Fahrzeugkarosserie verbunden, z.B. verschraubt oder verschweißt. Das Gegenlagerelement 80 kann auch ein integraler Bestandteil der Fahrzeugkarosserie sein. Das Gegenlagerelement 80 bildet einen Gehäuseabschnitt 81 zur Lagerung und Aufnahme des Lagerabschnitts 73 der Lagerachse 71 und umfasst im Wesentlichen einen senkrechten Wandabschnitt 83.

Im senkrechten Wandabschnitt 83 ist eine zylindrische Lagerausnehmung 84 mit einem Durchmesser D4 eingebracht, der dem Durchmesser D4 des Lagerabschnitts 73 entspricht und zur Aufnahme und Lagerung des Lagerabschnitts 73 der Lagerachse 71 in der montierten Situation dient.

Ausgehend von dieser Lagerausnehmung 84 erstreckt sich ein schräg nach unten verlaufender rechteckiger Schlitzbereich 85, der hinsichtlich der Breite B5 kleiner ausgeführt ist als der Durchmesser D4, und hinsichtlich der Breite B5 etwas größer ausgebildet ist, als die Breite B4 des Führungsabschnitts 76. Lagerausnehmung 84 und Schlitzbereich 85 bilden eine schlüssellochartigen Durchtrittsöffnung in dem Wandabschnitt 83. Vormontage-Lagerabschnitt 74 der Lagerachse 71 und Lagerausnehmung 84 mit Schlitzbereich 85 sind dabei derart ausgestaltet, dass die Lagerachse 71 (Schlüssel) nur in einer einzigen Relativwinkelstellung in Bezug auf eine Längsachse der Lagerachse in einer axialen Richtung (Darstellung Pfeil VI) in die Lagerausnehmung 84 mit Schlitzbereich 85 - Schlüsselloch - eingesteckt werden kann.

In dieser eingesteckten Position ist die Vormontage-Position der Lagerachse 71 erreicht.

Ausgehend von dieser Vormontage-Position wird anschließend in einem zweiten Montageschritt bei einer Verdrehung ausgehend von dieser Relativwinkelstellung, die in der Figur 4 gezeigt ist, eine Verriegelung der Lagerachse 71 über den Verriegelungsabschnitt 75 erreicht und ein axiales Herausnehmen der Lagerachse 71 ist blockiert (Darstellung der Figur 7). Das zuvor beschriebene Prinzip entspricht dem Schlüssel / SchlüssellochPrinzip.

Figur 5 zeigt die mittlere Lagerstelle 90 mit einem bereits montierten Lehnenelement 1 über eine Lagerachse 91 auf der linken Seite im Gegenlagerelement 100 und einer noch unmontierten Situation einer Lagerachse 91 auf der rechten Seite des Gegenlagerelements 100.

Die Lagerachse 91 umfasst unterschiedliche Abschnitte, denen verschiedene Funktionen zugeordnet sind. Ein erster zylindrischer Endabschnitt 92 weist einen Durchmesser D5 auf und dient zur Anbindung an den Lehnenrahmen. Angrenzend an diesen zylindrischen Endabschnitt 92 folgt in axialer Richtung gesehen ein Vormontage-Lagerabschnitt 94 umfasst einen rechteckigen Führungsabschnitt 96 mit parallel zueinander ausgerichteten Seitenflächen 97 und einer Breite B6. Daran anschließend folgt der eigentliche zylindrische Lagerabschnitt 93 mit einem gegenüber dem ersten Durchmesser D5 größeren Durchmesser D6. Der zylindrische Lagerabschnitt 93 wird endseitig von einem plattenförmigen Endabschnitt 99 begrenzt. Der plattenförmige Endabschnitt 99 weist eine im Wesentlichen rechteckige Grundfläche mit Seitenkanten 99a und abgerundeter Ober- und Unterkante 99b auf. Die Seitenkanten 99a sind hinsichtlich einer Länge L1 länger ausgeführt als die Ober- und Unterkante 99b mit einer Länge L2. Des Weiteren ist an den plattenförmigen Endabschnitt 99 in axialer Richtung gesehen auf der gegenüberliegenden Seite des zylindrischen Lagerabschnitts 93 ein zylindrischer Endabschnitt angeformt. Dieser zylindrische Endabschnitt ist in den Zeichnungen nicht ersichtlich.

Das zugehörige Gegenlagerelement 100 ist in Querrichtung des Kraftfahrzeugs gesehen in einem mittleren Bereich am Fahrzeugboden 6 verbunden, z.B. verschraubt oder verschweißt. Das Gegenlagerelement 100 kann auch ein integraler Bestandteil der Fahrzeugkarosserie sein. Das Gegenlagerelement 100 bildet einen Gehäuseabschnitt zur Lagerung und Aufnahme der Lagerachsen 91 von zwei benachbart angeordneten Lehnenelementen 1 und ist dementsprechend spiegelsymmetrisch um eine Mittelachse ausgeführt. Das Gegenlagerelement 100 umfasst im Wesentlichen ein in z- Richtung nach oben offenes Gehäuse 101 mit parallel zueinander ausgerichteten senkrechten Wandabschnitte 103 sowie die Wandabschnitte 103 verbindende Seitenwände 102. Die Wandabschnitte 103 sowie die Seitenwände 102 begrenzen einen in z-Richtung nach oben offenen Aufnahmeraum.

In jedem der parallel zueinander angeordneten senkrechten Wandabschnitte 103 ist eine zylindrische Lagerausnehmung 104 mit einem Durchmesser D6 eingebracht, der dem Durchmesser D6 des Lagerabschnitts 93 entspricht und zur Aufnahme und Lagerung der Lagerachse 91 in der montierten Situation (Endmontage-Position) dient.

Ausgehend von dieser Lagerausnehmung 104 erstreckt sich ein nach oben verlaufender rechteckiger Schlitzbereich 105, der hinsichtlich der Breite B8 kleiner ausgeführt ist als der Durchmesser D6, und hinsichtlich der Breite B8 etwas größer ausgebildet ist, als die Breite B6 des Führungsabschnitts 96. Der Schlitzbereich 105 ist nach oben hin offen ausgeführt und mündet in dem nach oben hin offenen Aufnahmeraum des Gehäuses 101.

Des Weiteren umfasst die mittlere Lagerstelle 90 eine Blende 110 die ein Abdeckelement 111 und einen ringförmig daran angeformten Clips 112 umfasst. Der Clips 112 ist zur lösbaren, verrasteten Halterung der zylindrischen zueinander weisenden Endabschnitte der beiden Lagerachsen 91 der benachbarten Lehnenelemente 1 ausgeführt.

Aufgrund der obenstehend beschriebenen Ausgestaltung der äußern und mittleren Lagerstellen 70/90 ist eine werkzeuglose Montage und lage- und crashsicherer Einbau der Lehnenelemente 1 der Rückenlehne der Sitzanordnung wie nachfolgend beschrieben in mehreren Montageschritten möglich:
In einem ersten Montageschritt, der in der Figur 4 gezeigt ist, wird zunächst die äußere Lagerstelle 70 des Lehnenelements 1 montiert. Hierzu wird die Lagerachse 71 in einer Vormontage-Position mittels des Vormontage-Lagerabschnitts 74 in die Lagerausnehmung 84 mit Schlitzbereich 85 des Gegenlagerelements 80 in axialer Richtung (y-Richtung) seitlich eingesteckt. Wie dies bereits obenstehend erläutert ist, ist dies nur in einer definierten Relativposition der Lagerachse 71 in Bezug auf das Gegenlagerelement 80 nach dem Schlüssel / Schlüssellochprinzip möglich.

Nur in dieser in der Figur 4 gezeigten Lehnenposition ist ein Einstecken der Lagerachse 71 in das zugeordnete Gegenlagerelement 80 möglich. Das Einstecken der Lagerachse 71 des Lehnenelements 1 erfolgt dabei in Richtung des Pfeils VI.

In einem nachfolgenden zweiten Montageschritt, der in der Figur 5 gezeigt ist, wird die mittlere Lagerstelle 90 des Lehnenelements 1 montiert. Hierfür wird die Lagerachse 91 zwecks Erzielung der Vormontage-Position mittels ihres Vormontageabschnitts 94 bzw. Führungsabschnitts 96 von oben (Pfeil VII) in den Schlitzbereich 105 eingesteckt. In der komplett derart eingesteckten nicht in den Figuren gezeigten Situation kann die Lagerachse 91 über den Führungsabschnitt 96 seitlich in dem Schlitzbereich 105 an den den Schlitzbereich 105 begrenzenden gegenüberliegenden Seitenwänden 105a abgestützt und vorjustiert in Lage gehalten werden.

Nachfolgend zu dem zweiten Montageschritt erfolgt, wie es in der Figur 6 angezeigt ist ein dritter Montageschritt, hierbei wird die Blende 110 auf das Gegenlagerelement 100 von oben, wie es durch den Pfeil VIII angezeigt ist, aufgesteckt. Über den angeformten Clips 112 werden die in das Gegenlagerelement 100 eingesetzten Lagerachsen 91 in axialer Richtung auseinandergeschoben, wodurch die Lagerachsen 91 ausgehend von dem Führungsabschnitt 96 auf die Lagerabschnitte 93 in die zugeordnete Lagerausnehmung 104 axial verschoben werden. Der Clips 112 greift dabei rastend auf die zylindrischen Endabschnitteein.

Nach dem dritten Montageschritt und die axiale Verlagerung der Lagerachsen 71 und 91 sind die äußere Lagerstelle 70 und die mittlere Lagerstelle 90 derart ausgerichtet, dass die zylindrischen Lagerabschnitte der Lagerachsen in den entsprechend zugeordneten Lagerausnehmungen 84 und 104 der Gegenlagerelemente 80 und 100 gelagert sind. Nach einer abschließenden Verschwenkbewegung - die in der Figur 7 mit dem Pfeil X gezeigt ist- um die Schwenkachse 4 in die Gebrauchsstellung der Lehnenelemente 1 sind die äußere und mittlere Lagerstelle in der komplett montierten Situation.

Die Figur 3 zeigt die obenstehend beschriebene montierte Situation (Endmontage-Position) des Lehnenelements. Insbesondere aus der perspektivischen Ansicht ist zu erkennen, dass die Lagerachsen 71 und 91 verschwenkbar um die zylindrischen Lagerabschnitte 73/93 d.h. um die Schwenkachse 4 lage- und crashsicher gehalten sind. Die Lage- und Chrashsicherung wird insbesondere über den Führungsabschnitte 96 bzw. Verriegelungsabschnitt 75 erreicht die in dem zugeordneten Gegenlagerelement 80 bzw. 100 verdreht in Bezug auf den entsprechend zugeordneten Schlitzabschnitt gehalten sind.

### Bezugszeichenliste

- 1: Lehnenelement
- 2: unterer Endbereich
- 4: Schwenkachse
- 70: äußere Lagerstelle
- 71: Lagerachse
- 73: Lagerabschnitt
- 74: Vormontage-Lagerabschnitt
- 75: Verriegelungsabschnitt
- 76: Führungsabschnitt
- 77: Seitenflächen
- 80: Gegenlagerelement
- 83: senkrechter Wandabschitt
- 84: Lagerausnehmung
- 85: Schlitzbereich
- 90: mittlere Lagerstelle
- 91: Lagerachse
- 92: zylindrischer Endabschnitt
- 93: Lagerabschnitt
- 94: Vormontage-Abschnitt
- 96: Führungsabschnitt
- 99: plattenförmiger Endabschnitt
- 99a: Seitenkanten
- 99b: Ober- und Unterkante
- 99c: zylindrischer Endabschnitt
- 100: Gegenlagerelement
- 101: Gehäuse
- 102: Seitenwände
- 103: Wandbschnitte
- 104: Lagerausnehmung
- 105: Schlitzbereich
- 110: Blende
- 112: Clips

## Patentansprüche

1. Befestigungsvorrichtung für Lehnenelemente (1) einer Rückenlehne einer Sitzanordnung in einem Kraftfahrzeug, wobei die Rückenlehne zwei unabhängig voneinander um eine quer zur Fahrtrichtung verlaufende Schwenkachse (4) verlagerbar angeordnete Lehnenelemente (1) aufweist,
wobei jedes Lehnenelement (1) zur Bildung der Schwenkachse (4) eine äußere Lagerstelle (70) und eine mittlere Lagestelle (90) umfasst,
wobei die äußere Lagerstelle (70) eine an dem jeweiligen Lehnenelement (1) festgelegte Lagerachse (71) und ein an der Karosserie des Kraftfahrzeugs festgelegtes Gegenlagerelement (80) umfasst,
wobei die Lagerachse (71) jedes Lehnenelements (1) in einer Vormontage-Position und in einer Endmontage-Position in dem Gegenlagerelement (80) gelagert werden kann und hierfür einen Endabschnitt zur Anbindung an das jeweilige Lehnenelement (1), einen zylindrischen Lagerabschnitt (73) zur Lagerung in der Endmontage-Position und einen Vormontage-Lagerabschnitt (74) zur abgestützten Lagerung in der Vormontage-Position aufweist, wobei der Vormontage-Lagerabschnitt (74) sich als länglicher Riegel radial einseitig von dem zylindrischen Lagerabschnitt (73) erstreckt und einen rechteckigen Führungsabschnitt (76) mit parallel zueinander ausgerichteten Seitenflächen (77) zur Lagerung in der Vormontage-Position, umfasst,
wobei das Gegenlagerelement (80) einen Gehäuseabschnitt (81) mit einer schlüssellochartigen Durchtrittsöffnung aufweist, die durch eine zum Lagerabschnitt (73) korrespondierende zylindrischen Lagerausnehmung (84) und einen rechteckigen Schlitzbereich (85) zur Aufnahme des Führungsabschnitts (76) in der Vormontage-Position gebildet wird, wobei die mittlere Lagerstelle (90) eine an dem jeweiligen Lehnenelement (1) festgelegte Lagerachse (91) und ein an der Karosserie des Kraftfahrzeugs festgelegtes Gegenlagerelement (100) umfasst,
wobei die Lagerachse (91) jedes Lehnenelements (1) in einer Vormontage-Position und in einer Endmontage-Position in dem Gegenlagerelement (100) gegenüberliegend gelagert werden kann und hierfür einen Endabschnitt zur Anbindung an das jeweilige Lehnenelement (1), einen Vormontage-Lagerabschnitt (94) mit einem rechteckigen Führungsabschnitt (96) zur Lagerung in der Vormontage-Position und einen zylindrischen Lagerabschnitt (93) zur Lagerung in der Endmontage-Position, umfasst,
wobei das Gegenlagerelement (100) einen Gehäuseabschnitt zur Lagerung und Aufnahme der zwei benachbart angeordneten Lagerachsen (91) umfasst, und hierfür zwei Wandabschnitte (103) mit jeweils einer zu den Lagerabschnitten (93) zylindrischen Lagerausnehmung (104), sowie jeweils einem rechteckigen Schlitzbereich (105) zur Aufnahme des Führungsabschnitts (96) in der Vormontage-Position, und eine Blende (110) mit einem Abdeckelement (111) und einem Clips (112) umfasst, der zum Auseinanderschieben und der verrasteten Halterung der zylindrischen zueinander weisenden Endabschnitte der gegenüberliegend in dem Gegenlagerelement (100) eingesetzten Lagerachsen (91) ausgehend von der Vormontage-Position in die Endmontage-Position in den Gehäuseabschnitt einsetzbar ist.

2. Befestigungsvorrichtung für ein Lehnenelement (1) einer Rückenlehne einer Sitzanordnung in einem Kraftfahrzeuge nach Anspruch 1, **dadurch gekennzeichnet, dass** der zylindrische Lagerabschnitt (93) axial endseitig von einem plattenförmigen Endabschnitt (99) begrenzt wird, wobei der plattenförmige Endabschnitt (99) eine im Wesentlichen rechteckige Grundfläche mit Seitenkanten (99a) und einer Ober- und Unterkante (99b) aufweist, wobei die Seitenkanten (99a) hinsichtlich einer Länge (L1) länger ausgeführt sind als die Ober- und Unterkante 99b mit einer Länge (L2).

3. Befestigungsvorrichtung für ein Lehnenelement (1) einer Rückenlehne einer Sitzanordnung in einem Kraftfahrzeug nach Anspruch 2, **dadurch gekennzeichnet, dass** an den plattenförmigen Endabschnitt (99) in axialer Richtung gesehen auf der gegenüberliegenden Seite des zylindrischen Lagerabschnitts (93) ein zylindrischer Endabschnitt angeformt ist.

4. Befestigungsvorrichtung für ein Lehnenelement (1) einer Rückenlehne einer Sitzanordnung in einem Kraftfahrzeuge nach Anspruch 3, **dadurch gekennzeichnet, dass** der Clips (112) zur lösbaren, verrasteten Halterung der zylindrischen in der Endmontage-Position zueinander weisenden Endabschnitte der beiden Lagerachsen (91) ausgeführt ist.

5. Verfahren zur Montage von zwei Lehnenelementen (1) einer Lehnenanordnung mittels der Befestigungsvorrichtung nach einem der Ansprüche 1 - 4 mit den folgenden Montageschritten:
a. Ausrichten des ersten Lehnenelements (1) in eine Lehnenmontageposition derart, dass zunächst die äußere Lagerstelle (70) montiert wird, wobei die Lagerachse (71) in der Vormontage-Position mittels des Vormontage-Lagerabschnitts (74) in die schlüssellochartige Durchtrittsöffnung des Gegenlagerelements (80) in axialer Richtung seitlich eingesteckt wird,
b. Anschließende Montage der mittleren Lagerstelle (90), wobei die Lagerachse (91) zwecks Erzielung der Vormontage-Position mittels ihres Vormontageabschnitts (94) bzw. Führungsabschnitts (96) senkrecht von oben nach unten in den Schlitzbereich (105) eingesteckt wird und die Lagerachse (91) über den Führungsabschnitt (96) seitlich in dem Schlitzbereich (105) vorjustiert in Lage gehalten wird,
c. Montieren des zweiten Lehnenelements (1) gemäß den Schritten a. und b. in die Vormontage-Position,
d. Aufstecken der Blende (110) auf das Gegenlagerelement (100) derart, dass über das Einstecken des Clips (112) die gegenüberliegend in dem Gegenlagerelement (100) eingesetzten Lagerachsen (91) des ersten und zweiten Lehnenelements (1) ausgehend von dem jeweils zugeordneten Führungsabschnitt (96) auf den zylindrischen Lagerabschnitt (93) in die zugeordneten Lagerausnehmungen (104) zur Bildung der Schwenkachse (4) in axialer Richtung auseinandergeschoben werden, wobei die Lagerachsen (91) an ihren Endabschnitten mittels des Clips verrastet in Position gehalten werden.

## Claims

1. Fastening device for backrest elements (1) of a backrest of a seat arrangement in a motor vehicle, wherein the backrest has two backrest elements (1) arranged movably independently of each other about a pivot axis (4) running transversely with respect to the direction of travel,
wherein each backrest element (1) comprises an outer bearing point (70) and a central bearing point (90) for forming the pivot axis (4),
wherein the outer bearing point (70) comprises a bearing spindle (71) secured on the respective backrest element (1) and a counter bearing element (80) secured on the body of the motor vehicle,
wherein the bearing axis (71) of each backrest element (1) can be mounted in the counter bearing element (80) in a preassembly position and in a final assembly position and, for this purpose, has an end portion for attaching to the respective backrest element (1), a cylindrical bearing portion (73) for mounting in the final assembly position, and a preassembly bearing portion (74) for the supported mounting in the preassembly position, wherein the preassembly bearing portion (74) extends in the form of an elongate latch radially on one side from the cylindrical bearing portion (73) and comprises a rectangular guide portion (76) with side surfaces (77), which are aligned parallel to each other, for mounting in the preassembly position,
wherein the counter bearing element (80) has a housing portion (81) with a keyhole-like passage opening, which is formed by a cylindrical bearing recess (84) corresponding to the bearing portion (73) and a rectangular slot region (85) for receiving the guide portion (76) in the preassembly position,
wherein the central bearing point (90) comprises a bearing spindle (91) secured on the respective backrest element (1) and a counter bearing element (100) secured on the body of the motor vehicle,
wherein the bearing spindle (91) of each backrest element (1) can be mounted lying opposite in the counter bearing element (100) in a preassembly position and in a final assembly position and, for this purpose, comprises an end portion for attaching to the respective backrest element (1), a preassembly bearing portion (94) with a rectangular guide portion (96) for mounting in the preassembly position, and a cylindrical bearing portion (93) for mounting in the final assembly position,
wherein the counter bearing element (100) comprises a housing portion for the mounting and receiving of the two adjacently arranged bearing spindles (91) and, for this purpose, comprises two wall portions (103) each having a cylindrical bearing recess (104) with respect to the bearing portions (93) and in each case a rectangular slot region (105) for receiving the guide portion (96) in the preassembly position, and a panel (110) with a covering element (111) and a clip (112) which, for the pushing apart and the latched holding of the cylindrical, mutually facing end portions of the bearing spindles (91), which are inserted lying opposite in the counter bearing element (100), is insertable starting from the preassembly position into the final assembly position in the housing portion.

2. Fastening device for a backrest element (1) of a backrest of a seat arrangement in a motor vehicle according to Claim 1, **characterized in that** the cylindrical bearing portion (93) is bounded axially on the end side by a plate-like end portion (99), wherein the plate-like end portion (99) has a substantially rectangular base area with side edges (99a) and an upper and lower edge (99b), wherein the side edges (99a) are longer in respect of a length (L1) than the upper and lower edge (99b) with a length (L2).

3. Fastening device for a backrest element (1) of a backrest of a seat arrangement in a motor vehicle according to Claim 2, **characterized in that** a cylindrical end portion is integrally formed on the plate-like end portion (99), on the opposite side of the cylindrical bearing portion (93), as seen in the axial direction.

4. Fastening device for a backrest element (1) of a backrest of a seat arrangement in a motor vehicle according to Claim 3, **characterized in that** the clip (112) is designed for the releasable, latched holding of the cylindrical end portions of the two bearing spindles (91), which end portions face each other in the final assembly position.

5. Method for mounting two backrest elements (1) of a backrest arrangement by means of the fastening device according to one of Claims 1-4, comprising the following mounting steps:
a. aligning the first backrest element (1) in a backrest assembly position in such a manner that first of all the outer bearing point (70) is mounted, wherein, in the preassembly position, the bearing spindle (71) is inserted laterally in the axial direction into the keyhole-like through opening in the counter bearing element (80) by means of the preassembly bearing portion (74),
b. subsequently mounting the central bearing point (90), wherein, for the purpose of achieving the preassembly position, the bearing spindle (91) is inserted by means of its preassembly portion (94) and guide portion (96) perpendicularly from the top downwards into the slot region (105) and the bearing spindle (91) is held preadjusted in position laterally in the slot region (105) via the guide portion (96),
c. mounting the second backrest element (1) according to steps a. and b. into the preassembly position,
d. attaching the panel (110) onto the counter bearing element (100) in such a manner that, via the insertion of the clip (112), the bearing spindles (91) of the first and second backrest element (1), which bearing spindles are inserted lying opposite in the counter bearing element (100), are pushed apart in the axial direction from the respectively assigned guide portion (96) on the cylindrical bearing portion (93) into the assigned bearing recesses (104) in order to form the pivot axis (4), wherein the bearing spindles (91) are held at the end portions thereof latched into position by means of the clip.

## Revendications

1. Dispositif de fixation pour des éléments de dossier (1) d'un dossier d'un agencement de siège dans un véhicule automobile, le dossier comprenant deux éléments de dossier (1) disposés indépendamment l'un de l'autre de manière à pouvoir être déplacés autour d'un axe de pivotement (4) s'étendant transversalement à la direction de déplacement,
chaque élément de dossier (1) comprenant, pour former l'axe de pivotement (4), un point de positionnement extérieur (70) et un point de positionnement central (90),
le point de positionnement extérieur (70) comprenant un axe de positionnement (71) fixé sur l'élément de dossier (1) respectif et un élément de positionnement associé (80) fixé sur la carrosserie du véhicule automobile,
l'axe de positionnement (71) de chaque élément de dossier (1) étant apte à être maintenu dans une position de prémontage et dans une position de montage final dans l'élément de positionnement associé (80) et présentant à cet effet une partie d'extrémité pour la liaison à l'élément de dossier (1) respectif, une partie cylindrique de positionnement (73) pour le positionnement dans la position de montage final et une partie de positionnement de prémontage (74) pour le maintien soutenu dans la position de prémontage, la partie de positionnement de prémontage (74) s'étendant sous la forme d'une barre allongée radialement d'un côté de la partie cylindrique de positionnement (73) et comprenant une partie de guidage rectangulaire (76) avec des surfaces latérales (77) orientées parallèlement entre elles pour le positionnement dans la position de prémontage,
l'élément de positionnement associé (80) présentant une partie de logement (81) avec une ouverture traversante en forme de trou de serrure, qui est formée par un évidement cylindrique (84) formant palier correspondant à la partie de positionnement (73) et une zone de fente rectangulaire (85) pour recevoir la partie de guidage (76) dans la position de prémontage,
le point de positionnement central (90) comprenant un axe de positionnement (91) fixé sur l'élément de dossier respectif (1) et un élément de positionnement associé (100) fixé sur la carrosserie du véhicule automobile,
l'axe de positionnement (91) de chaque élément de dossier (1) étant apte à être maintenu dans une position de prémontage et dans une position de montage final dans l'élément de positionnement associé (100) et comprenant à cet effet une partie d'extrémité pour le raccordement à l'élément de dossier (1) respectif, une partie de positionnement de prémontage (94) avec une partie de guidage (96) rectangulaire pour le positionnement dans la position de prémontage et une partie cylindrique de positionnement (93) pour le positionnement dans la position de montage final,
l'élément de positionnement associé (100) comprenant une partie de logement pour le positionnement et la réception des deux axes de positionnement (91) disposés de manière adjacente, et pour cela deux parties de paroi (103) avec chacune un évidement cylindrique (104) formant palier en relation aux parties de positionnement (93), ainsi qu'une zone de fente (105) rectangulaire respective, pour la réception de la partie de guidage (96) dans la position de prémontage, et un cache (110) avec un élément de recouvrement (111) et un clip (112), qui est apte à être inséré dans la partie de logement de façon à écarter et maintenir insérées dans l'élément de positionnement associé (100), par encliquetage, les parties d'extrémité cylindriques tournées l'une vers l'autre des axes de positionnement (91), depuis la position de prémontage vers la position de montage final.

2. Dispositif de fixation pour un élément de dossier (1) d'un dossier d'un agencement de siège dans un véhicule automobile selon la revendication 1, **caractérisé en ce que** la partie cylindrique de positionnement (93) est délimitée axialement à son extrémité par une partie d'extrémité en forme de plaque (99), la partie d'extrémité en forme de plaque (99) présentant une surface de base essentiellement rectangulaire avec des bords latéraux (99a) et un bord supérieur et un bord inférieur (99b), les bords latéraux (99a) étant réalisés plus longs en ce qui concerne une longueur (L1) que les bords supérieur et inférieur (99b) avec une longueur (L2).

3. Dispositif de fixation pour un élément de dossier (1) d'un dossier d'un agencement de siège dans un véhicule automobile selon la revendication 2, **caractérisé en ce qu'**une partie d'extrémité cylindrique est formée sur la partie d'extrémité en forme de plaque (99), vue dans la direction axiale, du côté opposé à la partie de positionnement cylindrique (93).

4. Dispositif de fixation d'un élément de dossier (1) d'un dossier d'un agencement de siège dans un véhicule automobile selon la revendication 3, **caractérisé en ce que** le clip (112) est réalisé de façon à maintenir de manière encliquetée, avec amovibilité, les parties d'extrémité cylindriques des deux axes de positionnement (91) qui sont en face l'un de l'autre dans la position de montage finale.

5. Procédé de montage de deux éléments de dossier (1) d'un ensemble de dossier au moyen du dispositif de fixation selon l'une des revendications 1 à 4, comprenant les étapes de montage suivantes :
a. orientation du premier élément de dossier (1) dans une position de montage de dossier de manière à monter d'abord le support extérieur (70), l'axe de positionnement (71) étant inséré latéralement dans la direction axiale dans la position de prémontage au moyen de la portion de positionnement de prémontage (74) dans l'ouverture traversante en forme de trou de serrure de l'élément de positionnement associé (80),
b. montage consécutif du point de positionnement central (90), l'axe de positionnement (91) étant inséré verticalement de haut en bas dans la zone de fente (105) au moyen de sa partie de prémontage (94) ou de sa partie de guidage (96) pour obtenir la position de prémontage, et l'axe de positionnement (91) étant maintenu en position pré-ajustée latéralement dans la zone de fente (105) par la partie de guidage (96),
c. montage du deuxième élément de dossier (1) selon les étapes a et b dans la position de prémontage,
d. emboîtement du cache (110) sur l'élément de positionnement associé (100) de telle sorte que, par l'insertion du clip (112), les axes de positionnement (91) en face l'un de l'autre du premier et du deuxième élément de dossier (1), insérés dans l'élément de positionnement associé (100), sont écartés dans la direction axiale, à partir de la partie de guidage (96) respectivement associée, sur la partie cylindrique de positionnement (93) dans les évidements formant palier (104) associés pour former l'axe de pivotement (4), les axes de positionnement (91) étant maintenus en position par encliquetage au niveau de leurs parties d'extrémité au moyen du clip.
